Europäisches Patentamt

**European Patent Office**

**Office européen des brevets**

(19)

(11) Publication number: **0 146 397**
**A2**

(12) # EUROPEAN PATENT APPLICATION

(21) Application number: **84308844.4**

(22) Date of filing: **18.12.84**

(51) Int. Cl.⁴: **H 02 G 1/12**

(30) Priority: **20.12.83 AU 2917/83**

(43) Date of publication of application: **26.06.85**
**Bulletin 85/26**

(84) Designated Contracting States: **AT BE CH DE FR GB IT LI NL SE**

(71) Applicant: **Kokotovich, Vasilije, 35 Ben Lomond Street, Bossley Park New South Wales 2176 (AU)**

(72) Inventor: **Kokotovich, Vasilije, 35 Ben Lomond Street, Bossley Park New South Wales 2176 (AU)**

(74) Representative: **Gordon, Richard John Albert, R.J. Gordon & Company 34 Tavistock Street, London WC2E 7PB (GB)**

(54) **Wire stripper.**

(57) A wire stripper having flexible opposed jaws (10, 11) wherein said jaws (10, 11) are rigidly connected and provided with opposed V-shaped cutting blades (16, 17), the cutting blades (16, 17) being set sufficiently deeply in said jaws (10, 11) to protect the wire core (24) from damage during a cutting movement greater than that required to sever the insulation (25) surrounding said core (24). Damage to the core (24) is avoided due to the relative incompressibility of the wire (24) being cut between work surface (22, 23) provided in each jaw (10, 11).

## "Wire Stripper"

THIS INVENTION relates to a wire stripper and is particularly applicable to a simple hand-held wire stripper for removing insulation from electrical wiring prior to the connection of said wiring to other wires or components.

Wire strippers are well known, however it has previously been the practice to provide a hand-held wire stripper resembling that of a pair of pliers, utilizing a pivoting axis. Between the "jaws" of the pliers is usually provided a number of orifices of differing sizes, the choice of orifice to be used depending on the size of the wire to be stripped. In use, it has been the practice to place the end of the wire transversley across the jaws of the tool in the appropriate recess and, on clamping the jaws together around the wire, the wire is forcibly withdrawn sideways, the insulation remaining within the jaws of the device.

The present invention seeks to overcome the disadvantages inherent in the prior art with regard to torsional stresses that may be induced in the hand and wrist of the user. It has been found that such tools may promote complaints such as tendo-sinovitis. Also most tools known offer little protection from electric shock.

An important object is to provide a wire stripper in which the arrangement of the cutting edges and flexible arms is such that the tool automatically provides for variations in the gauge of wire to be stripped without cutting the wire core. It is another object of this invention to provide a cheap and lightweight wire stripper which has few moving parts. It is further an object to provide a wire stripper including one or more fixedly linked arms which, due to their inherent resiliency, may be biased towards an open position to receive the length of wire to be stripped. A further object of the present invention is to provide a wire stripper in which the length of the wire to be stripped may be accurately determined during use of the tool.

In accordance with the present invention therefore there is provided a wire stripper for the removal of short lengths of insulation from an end of electrical wiring, said stripper comprising a pair of resilient opposed arms, said arms being inflexibly connected together at one end and set slightly divergent from each other, wherein each arm is provided at the other end with a substantially V shaped cutting blade adapted to co-operate with the cutting blade provided in the other arm on movement of said arms towards each other against the biassing effect of the resilient arm, the blades being mounted in each of said arms such that the apex of the V is in substantially the same plane as the undersurface of the arm in which it is mounted so that relative movement of the arms towards each other beyond a critical point is stopped by the substantially incompressible squeezing of the wire being cut between said under surfaces thus preventing inadvertent damage to the wire core.

Preferably, the stripper is adapted to receive wire whose axis is parallel to the longitudinal axis of the arms of the stripper by the provision of transverse cutting blades.

A further preferred embodiment relates to a stripper whose arms are fixedly attached to each other at one end and tapered towards the other end, such that the cutting blades fitted in the extremities of said arms may be resiliently moved towards each other on compression of one arm towards the other.

The cutting blades are preferably V shaped, and of such dimension to accommodate therebetween the electrical wire to be stripped. Further, the device is preferably provided with stop means for adjustably limiting the length of wire to be stripped.

A preferred form of the present invention will now be described with reference to the accompanying drawings, in which:-

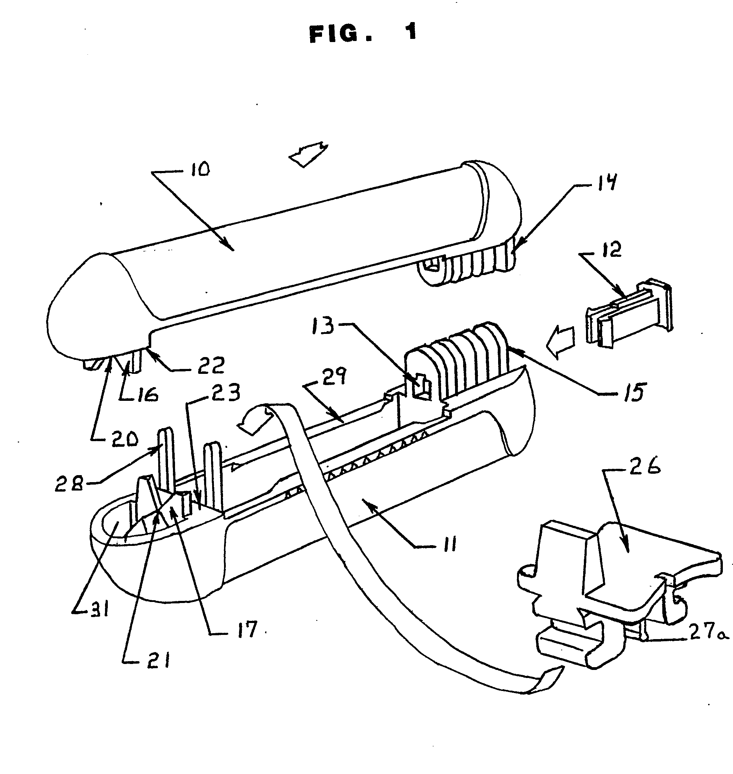

FIGURE 1 is an exploded perspective view;

FIGURE 2 is a plan view of the lower arm;

FIGURE 3 is a sectional side elevation;

FIGURE 4 is a sectional elevation showing a wire about to be cut;

FIGURE 5 is a sectional elevation showing the limit of the cutting movement, and

FIGURE 6 is a part cut-away perspective view illustrating use of the stop when wire is about to be cut.

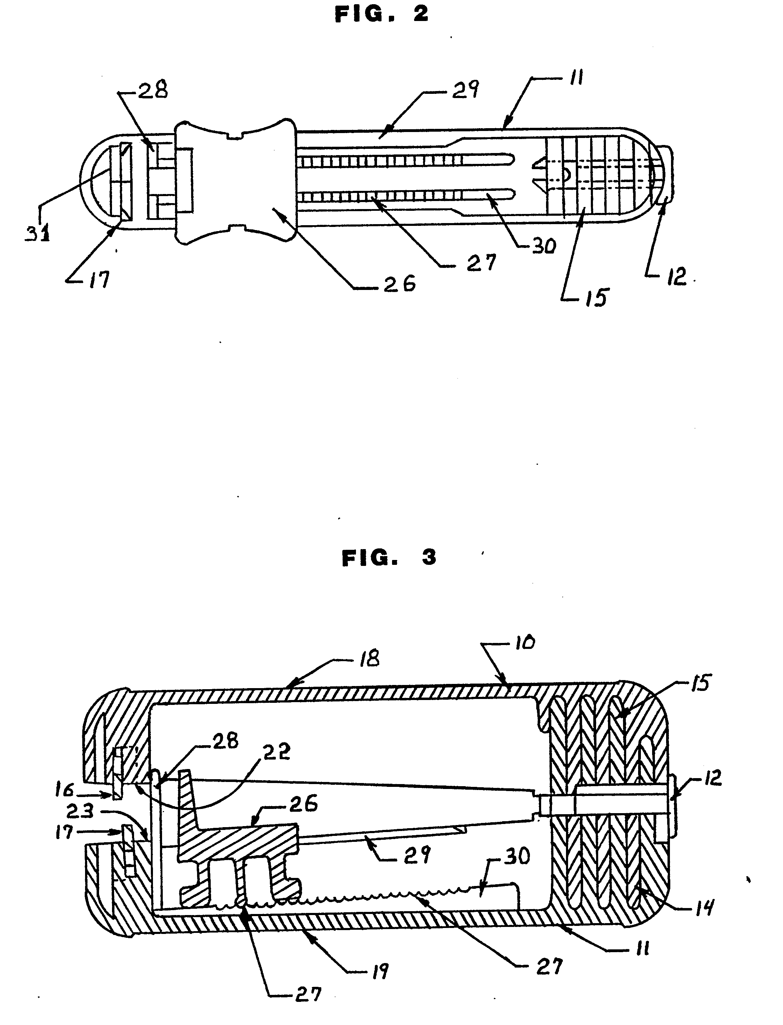

This embodiment provides a wire stripper having upper and lower arms 10 and 11 respectively. These arms are fixedly secured together at one end by means of a split pin 12 which passes through a series of holes 13 in co-operative segments 14, 15 affixed to each of arms 10 and 11 respectively. This is best shown in figure 3. The arms thus secured together at one end may be moved towards each other by an appropriate hand movement, causing the upper and lower cutting blades 16 and 17 respectively to pass over one an other in a scissors action. Two guide posts 28,28 are provided in the lower arm 11 that mesh with corresponding recesses not shown in the upperarm 10 to enhance stability in the cutting movement. Resiliency in each of the arms is enhanced by the tapering of the center portion of the arm as shown generally at 18 and 19 respectively, as well as manufacturing the article in an appropriate material such as a plastic with a high dielectric strength.

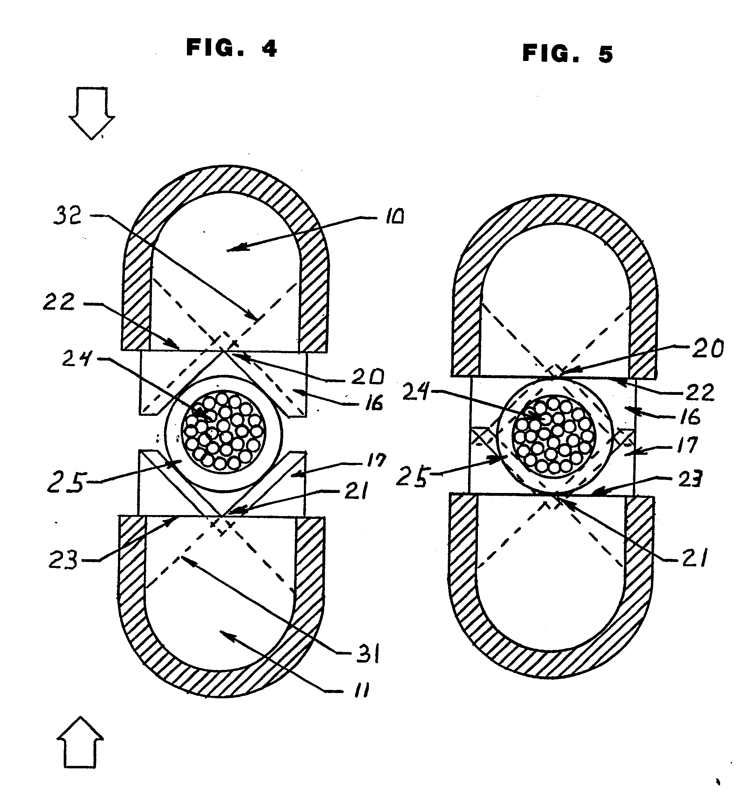

A feature of the invention is its ability to automatically strip insulation from wire of different gauges without damaging the metal wire core. No adjustment is necessary. This is achieved during manufacture by setting the V shaped cutting blades 16 and 17 in their respective arms such that the apex of the V's 20, 21 are in line with the work surfaces 22, 23 under each of the arms respectively. This spatial arrangement prevents inadvertent cutting of the core, as can be seen in figure 5.

In this figure a wire including a core 24 surrounded by insulation 25 is being cut by the opposing V blades 16, 17. A limit to the cutting action has been reached, as the wire sandwiched between the work surfaces 22 and 23 prevents further movement. The blades are so set that when this limit is reached, the insulation 25 is cut leaving the core undamaged. The stripper may then be rotated through 90 on the wire to complete the circumferential cut and then the wire is withdrawn, stripping off the insulation behind the closed blades.

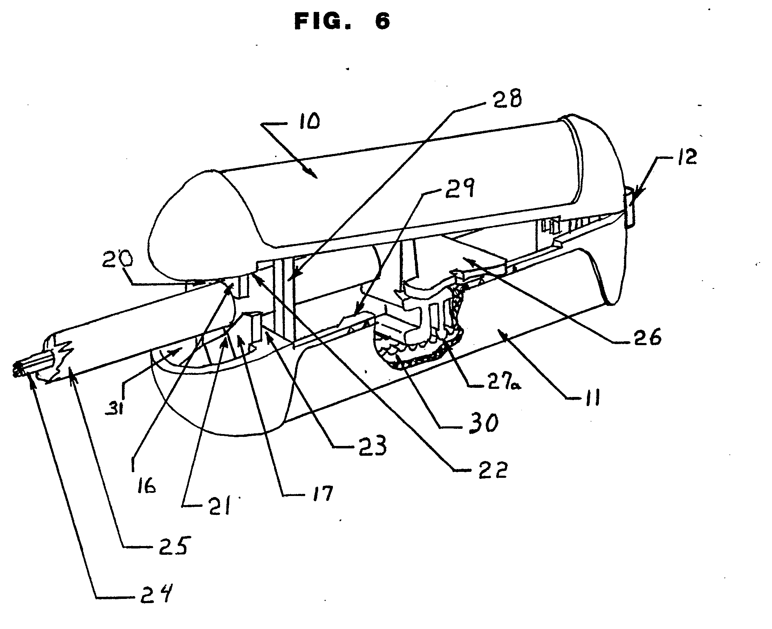

Figure 6 illustrates the use of a stop gauge 16 which is slidably mounted in the lower arm of the stripper. The stop 26 is located on two slides 29,29 on the inner rim of the lower arm, and a resiliently mounted stop rod 27a can engage any one of a number of serrations 27,27 provided on the upper edges of a part of rails 30. The rails 30 which are integral with the base of the arm, are tapered outwardly and are generally parallel to the slide 29. The stop may be gripped by thumb and forefinger and, with reference to a scale on the outer casing, moved to any desired position along the slides 29 and locked in place by stop rod 27a. The length of core to be exposed after the stripping operation may thus be accurately determined.

0146397

- 5 -

CLAIMS

1. A wire stripper for removing insulation (25) from an end portion of an insulated electrical wire (24) the stripper comprising a pair of elongate members (10,11) connected together for relative pivotal movement <u>characterised in that</u> each member (10,11) is connected to the other member (10,11) at one end portion thereof and each member (10,11) is provided at a remote end portion thereof with an abutment surface (22,23) and a cutting blade (16,17), the arrangement being such that, when the members (10,11) are pivoted towards one another with a portion of insulated electrical wire (24,25) disposed between the cutting blades (16,17), the blades (16,17) co-operate with one another to cut the insulation (25) but are prevented from damaging the wire (24) due to substantially incompressible squeezing of the wire (24) between the abutment surfaces (22,23).

2. A wire stripper as claimed in claim 1 <u>characterised in that</u> members (10,11) are inflexibly connected together and are resiliently opposed so as to be biased towards an open position.

3. A wire stripper as claimed in claim 2 <u>characterised in that</u> each blade (16,17) is substantially V-shaped and is mounted in the corresponding member (10,11) such that the apex of the V is substantially the same plane as the corresponding abutment surface (22,23).

4. A wire stripper as claimed in any one of the preceding claims <u>characterised in that</u> each of the blades (16,17) is contained in a plane extending transversely of the corresponding members (10,11).

5.   A wire stripper as claimed in any one of the preceding claims <u>characterised in that</u> there is provided a movable stop (26) to preset a length of wire (24,25) to be stripped.

6.   A wire stripper as claimed in claim 5 <u>characterised in that</u> the stop (26) is set by clipping it into any one of a number of preformed holders (27) provided within one or both of said members (10,11).

7.   A wire stripper as claimed in any one of the preceding claims <u>characterised in that</u> each of said members are tapered towards said blades to enhance the resiliency of said arms.

FIG. 1

0146397

1/4

0146397

**FIG. 2**

**FIG. 3**

FIG. 4

FIG. 5

4/4

0146397

FIG. 6